# EUROPEAN PATENT APPLICATION

(11) **EP 2 533 598 A1**
(43) Date of publication of application: **12.12.2012**
(21) Application number: 11737208.6
(22) Date of filing: 31.01.2011
(51) Int. Cl.: H04W 76/02, H04W 76/04, H04W 80/10

(54) **DATA RELAYING APPARATUS AND DATA RELAYING METHOD**

(30) Priority: 01.02.2010 JP 2010020407
(71) Applicant: NTT DOCOMO, INC., Chiyoda-ku Tokyo 100-6150 (JP)
(72) Inventor: YAMAMOTO Takashi, Tokyo 100-6150 (JP); SAWADA Masahiro, Tokyo 100-6150 (JP)
(74) Representative: Viering, Jentschura & Partner
(86) International application number: PCT/JP2011/051949
(87) International publication number: WO 2011/093499

(57) **Abstract**

In a SGSN (30), upon receiving data addressed to a mobile station (10) by a receiving unit when disconnection of a radio connection with the mobile station (10) is detected by a disconnection detection unit, a relay/non-relay determination unit determines whether or not to relay the data based on the type of communication determined by a communication type determination unit and performs relay of the data according to the determination. This allows the relay of data to be stopped for the type of communication such as conversational communication in SIP, thus preventing the transmission of unnecessary data to the mobile station (10) and thereby reducing the consumption of a resource for radio communication.

## Description

### Technical Field

The present invention relates to a data relaying apparatus and a data relaying method that relay data which is transmitted to a mobile station connected to a mobile communication network.

### Background Art

An example of a communication system in which a mobile station performs communication through a mobile communication network is disclosed in Patent Literature 1. The communication system includes a data relaying apparatus (SGSN) that controls communication between a network and a mobile station and a radio control apparatus that is placed on a channel between the mobile station and the data relaying apparatus and communicates with the mobile station by radio. Further, in this communication system, a connection for communication is made using SIP (Session Initiated Protocol), and a communication session is established by call control and then information data (conversational data etc.) is transmitted and received between mobile stations.

### Citation List

### Patent Literature

PTL 1: Japanese Unexamined Patent Application Publication No.2009-140090

### Summary of Invention

### Technical Problem

In the communication system according to related art, when a mobile station A and a mobile station B perform conversational communication using SIP, for example, there is a case where radio communication between the mobile station A and the radio control apparatus becomes disconnected such as when the mobile station A goes out of the communication range. In this case, a SIP control apparatus that performs call control gives a notification about the disconnection of radio communication to the mobile station B at the other end of communication. Note that the SIP control apparatus determines whether communication is disconnected or not by carrying out non-communication monitoring that monitors whether transmission of conversational data is made from the mobile station A. When the mobile station B receives a notification about the disconnection of communication, it stops transmission of conversational data to the mobile station A and ends the communication.

After radio communication between the mobile station A and the radio control apparatus is disconnected, until a notification about the disconnection of radio communication is given to the mobile station B at the other end of communication, the mobile station B continues to transmit conversational data toward the mobile station A being outside the communication range. At this time, the data relaying apparatus performs a reconnection process with the mobile station A being outside the communication range to try to resume communication. When, in this state, the mobile station A with which radio communication has been disconnected is back into the communication range, the data relaying apparatus transmits the conversational data that is transmitted from the mobile station B with which communication has been performed (which contains the conversational data that has been transmitted from the mobile station B to the data relaying apparatus when the mobile station A has been outside the communication range) to the mobile station A that is now back in the communication range.

However, in conversational communication by SIP, the mobile station A whose communication has been disconnected has deleted call information (information about a communication session) used for communication before the disconnection. Therefore, for the mobile station A, conversational data that is transmitted from the data relaying apparatus after the mobile station A comes back into the communication range is unnecessary conversational data whose source is unknown, and thus the mobile station A discards such conversational data. In this manner, in the communication system according to related art, despite that the data which reaches the mobile station after radio communication has been disconnected is discarded in the communication established for conversational communication or the like, radio communication is established between the radio control apparatus and the mobile station in order to transmit the data, which raises a problem that a resource for radio communication is wastefully consumed.

In view of the foregoing, an object of the present invention is to provide a data relaying apparatus and a data relaying method that can reduce the wasteful consumption of a resource for radio communication.

### Solution to Problem

According to the present invention, there is provided a data relaying apparatus that is included in a mobile communication network and relays data transmitted to a mobile station, which includes a communication type determination means for determining a type of communication performed by the mobile station, a disconnection detection means for detecting disconnection of a radio connection between the mobile station and the mobile communication network during communication of the mobile station, a receiving means for receiving data addressed to the mobile station, and a relay/non-relay determination means for, upon receipt of data addressed to the mobile station by the receiving means when disconnection of the radio connection is detected by the disconnection detection means, determining whether or not to relay the data based on the type of communication determined by the communication type determination means.

According to the present invention, there is also provided a data relaying method in a data relaying apparatus that is included in a mobile communication network and relays data transmitted to a mobile station, which includes a communication type determination step of determining a type of communication performed by the mobile station, a disconnection detection step of detecting disconnection of a radio connection between the mobile station and the mobile communication network during communication of the mobile station, a receiving step of receiving data addressed to the mobile station, and a relay/non-relay determination step of, upon receipt of data addressed to the mobile station in the receiving step when disconnection of the radio connection is detected in the disconnection detection step, determining whether or not to relay the data based on the type of communication determined in the communication type determination step.

In the present invention, upon receiving data addressed to the mobile station when disconnection of a radio connection during communication is detected, the data relaying apparatus determines whether or not to relay the data based on the type of communication and performs relay of the data according to the determination. This allows the relay of data to be stopped for the type of communication such as conversational communication in SIP, thus preventing the transmission of unnecessary data to the mobile station and thereby reducing the consumption of a resource for radio communication.

Further, the relay/non-relay determination means may determine whether or not to relay the data based on data addressed to the mobile station that is received by the receiving means when disconnection of the radio connection is detected by the disconnection detection means and the type of communication determined by the communication type determination means.

The data relaying apparatus thereby determines whether or not to perform relay of data in consideration of the data addressed to the mobile station that is received by the receiving means. This allows the relay to be done appropriately according to data.

### Advantageous Effects of Invention

According to the present invention, it is possible to provide a data relaying apparatus and a data relaying method that can reduce the wasteful consumption of a resource for radio communication.

### Brief Description of Drawings

Fig. 1 is a diagram showing the overall configuration of a communication system.
Fig. 2 is a diagram showing the flow of a signal until a communication connection by SIP is established.
Fig. 3 is a hardware configuration diagram of SGSN.
Fig. 4 is a flowchart showing the flow of a relay/non-relay determination process.
Fig. 5 is a diagram showing the flow of data among nodes.

### Description of Embodiments

A preferred embodiment of a communication system to which a data relaying apparatus and a data relaying method according to the present invention are applied will be described in detail with reference to the drawings. Note that, in the description of the drawings, the same elements will be denoted by the same reference symbols and redundant description will be omitted.

### (Overall Configuration of Communication System 1)

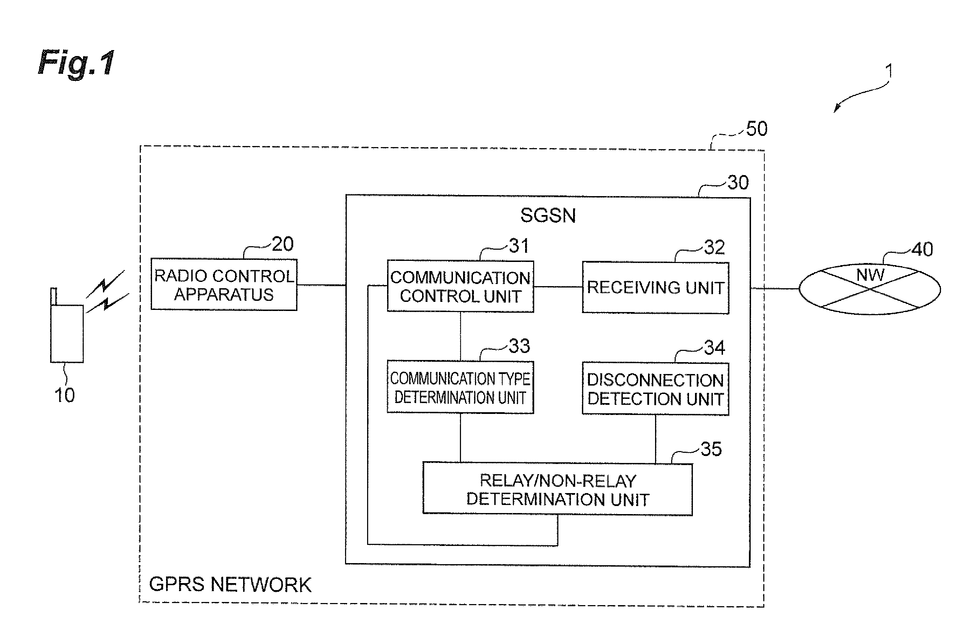

The overall configuration of a communication system 1 according to an embodiment is described hereinafter. Fig. 1 is a diagram showing the overall configuration of a communication system. In the communication system 1 shown in Fig. 1, data communication is performed using GPRS (General Packet Radio Service). Thus, the communication system 1 includes a SGSN (Serving GPRS Support Node) 30 and a radio control apparatus 20. The radio control apparatus 20 and the SGSN 30 are included in a GPRS network (IP-CAN) 50 serving as a mobile communication network. Further, the communication system 1 includes a mobile station 10 that is connected to the GPRS network 50 and a NW (network) 40 that is different from the GPRS network 50. Note that, although the mobile station 10 communicates with the NW 40 in this example, the mobile station 10 may communicate with another mobile station rather than the NW 40. Further, a connection between the mobile station 10 and the NW 40 means that the mobile station 10 is connected with another communication device (for example, a media server, another mobile station or the like) through the NW 40.

The radio control apparatus 20 controls radio communication between the mobile station 10 and the GPRS network 50, and a radio connection is made between a base station, not shown, that is managed by the radio control apparatus 20 and the mobile station 10. Further, the radio control apparatus 20 transmits data transmitted from the SGSN 30 to the mobile station 10 by radio communication and transmits data transmitted from the mobile station 10 by radio communication to the SGSN 30. Furthermore, when radio communication with the mobile station 10 is disconnected due to deterioration of communication quality or the like, the radio control apparatus 20 detects the disconnection and transmits a communication disconnection signal indicating that radio communication is disconnected to the SGSN 30. At this time, the mobile station 10 and the SGSN 30 are in the Preservation state in which GPRS PDP (Packet Data Protocol) information is preserved (IP channel established by GPRS is preserved) but only the radio channel is released.

The SGSN 30 functions as a data relaying apparatus that relays data transmitted and received between the mobile station 10 and the NW 40. The SGSN 30 includes a receiving unit 32 (receiving means) that receives data transmitted from the NW 40 and the mobile station 10, a communication control unit 31 that transmits data received by the receiving unit 32 to the mobile station 10 or the NW 40, and a communication type determination unit 33 (communication type determination means) that determines the type of communication performed by the mobile station 10. Note that the SGSN 30 acquires subscriber information of the mobile station 10 at the time of location registration of the mobile station 10. The communication control unit 31 performs transmission of data by taking the subscriber information into consideration as well.

Further, the SGSN 30 includes a disconnection detection unit 34 (disconnection detection means) that detects disconnection of a radio connection between the mobile station 10 and the GPRS network 50 which occurs during communication of the mobile station 10, and a relay/non-relay determination unit 35 (relay/non-relay determination means) that, upon receipt of data addressed to the mobile station 10 by the receiving unit 32 after disconnection of radio connection is detected by the disconnection detection unit 34, determines whether or not to relay the data based on the type of communication determined by the communication type determination unit 33.

The communication type determination unit 33 determines the type (call type) of communication established between the mobile station 10 and the NW 40 for each communication and stores the type of communication in association with each communication. Note that the type of communication indicates the property of data that is transmitted by the communication (channel, call). In some cases, the mobile station 10 performs two types of communication such as conversational communication and streaming, for example, at a time and, in this case, the type of communication (conversational communication, streaming) is stored in association with each of the communication. Further, as a specific method of determining the type of communication, the communication type determination unit 33 determines the type of communication at the time of starting communication between the mobile station 10 and the NW 40 on the basis of a signal when establishing the IP channel by GPRS.

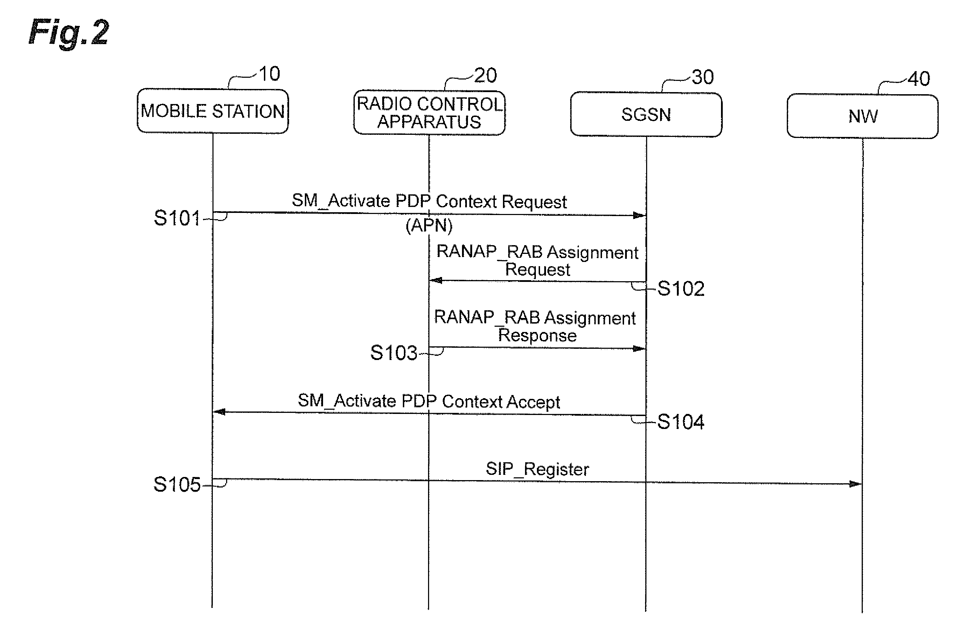

The flow of a process to establish an IP channel by GPRS is described hereinafter. In this example, communication between the mobile station 10 and the NW 40 is established using SIP. Fig. 2 is a diagram showing the flow of a signal until a SIP communication connection is established between the mobile station 10 and the NW 40.

In Step S101, the mobile station 10 transmits "SM_Activate PDP Context Request" that requests the start of communication to the SGSN 30 through the radio control apparatus 20. In Step S102, the SGSN 30 transmits "RANAP_RAB Assignment Request (radio access bearer assignment request)" to the radio control apparatus 20. In Step S103, the radio control apparatus 20 transmits "RANAP_RAB Assignment Response (radio access bearer assignment response)" to the SGSN 30. In Step S104, the SGSN 30 transmits "SM_Activate PDP Context Accept" that accepts the request for the start of communication to the mobile station 10 through the radio control apparatus 20. In Step S105, the mobile station 10 transmits "SIP_Register" for registering itself to a SIP control device, which is not shown, and a communication connection by SIP is thereby established.

In Step S101, "SM_Activate PDP Context Request" that is transmitted from the mobile station 10 to the SGSN 30 in Step S101 contains APN (Access Point Name). The APN is the name of an access point for connecting a communication device to a network. Further, the communication type determination unit 33 stores association information that associates the APN with the communication type in advance. The communication type determination unit 33 determines and stores the type of communication based on the association information and the APN contained in "SM_Activate PDP Context Request". Although the case where the APN and the communication type are associated in one-to-one relationship is described in this embodiment, there is a case where a plurality of communication types are associated with a single APN, for example. In this case, the type of communication is determined on the basis of information other than the APN among signals transmitted and received at the time of establishing a communication connection.

When the receiving unit 32 receives data, the communication control unit 31 specifies by which communication device and through which communication the received data is to be transmitted and received, and transmits the data to the specified destination through the specified communication. In this embodiment, the communication control unit 31 specifies that the received data is data to be transmitted and received between the mobile station 10 and the NW 40 and further specifies which communication between the mobile station 10 and the NW 40 is to be used. The communication control unit 31 transmits the data received by the receiving unit 32 to the mobile station 10 or the NW 40 through the specified communication between the mobile station 10 and the NW 40. In the specification of communication, it may be specified by which mobile station and through which communication the data is to be transmitted and received based on TEID (Tunnel Endpoint IDentifier) at the GTP (GPRS Tunnelling Protocol) header of the received data as the way it used be.

Further, when the communication control unit 31 receives an instruction to stop the relay of data that is transmitted and received through certain communication from the relay/non-relay determination unit 35, the communication control unit 31 stops the transmission of the data for which an instruction to stop the relay is given to the mobile station 10, as described in detail later. The communication control unit 31 further discards the data for which an instruction to stop the relay is given.

The disconnection detection unit 34 detects disconnection of a radio connection between the mobile station 10 and the GPRS network 50 based on whether a communication disconnection signal is transmitted from the radio control apparatus 20.

When disconnection of radio communication is detected by the disconnection detection unit 34, the relay/non-relay determination unit 35 determines whether or not to relay the data addressed to the mobile station 10 that is received by the receiving unit 32 and, when not relaying the data, gives an instruction to stop the relay to the communication control unit 31. Note that because communication for which radio communication is disconnected is specified by the communication control unit 31, the relay/non-relay determination unit 35 can find the type of communication for which radio communication is disconnected based on the communication specified by the communication control unit 31 and information that associates the type of communication with each communication that is stored in the communication type determination unit 33. Further, the relay/non-relay determination unit 35 stores communication type association information that associates the type of communication with whether or not to perform relay in advance. Therefore, the relay/non-relay determination unit 35 can determine whether or not to relay data based on the communication type association information and the found type of the communication.

The type of communication includes "Conversational" (real time two-way communication) which is used in conversational communication, video telephone communication and the like, "Streaming" (real time one-way communication) which is used in streaming, broadcasting and the like, "Interactive" (two-way communication) which is used in Web browsing and the like, for example. Another communication is "Background" which is used in data downloading, e-mail, telemetory and the like, for example. In this embodiment, when the type of communication is "Conversational" such as conversational communication, the relay/non-relay determination unit 35 determines not to relay data because even if communication is reestablished after disconnection of radio communication and data is transmitted to the mobile station 10, the data is discarded by the mobile station 10. On the other hand, when the type of communication is other than "Conversational", the relay/non-relay determination unit 35 determines to execute a process to re-establish communication and relay data.

When the type of communication is not the one to perform relay, the relay/non-relay determination unit 35 further determines whether or not to relay data based on the content of the data. The relay/non-relay determination unit 35 stores data type association information that associates the content of data with whether or not to perform relay in advance. Therefore, the relay/non-relay determination unit 35 refers to the content of data (the type and property of data) received by the receiving unit 32 and determines whether or not to relay the data based on the data type association information.

Specifically, when the content of data is data for making a new connection such as a signal related to a connection of SIP (control data, C-Plane data), for example, the relay/non-relay determination unit 35 determines to relay the data in order to establish a new connection. On the other hand, when the content of data is data related to media such as voice (user data, U-Plane data), for example, the relay/non-relay determination unit 35 determines not to relay the data because even if communication is reestablished after disconnection of radio communication and data is transmitted to the mobile station 10, the data is discarded by the mobile station 10. Note that, in SIP communication, a control signal is notified by SIP, and data related to media such as voice is transmitted and received by RTP(Real-Time Transport Protocol)/RTCP(RTP Control Protocol). This allows relay to be done appropriately according to data. Further, whether the content of data is data related to a connection for communication or the like and whether to perform relay or not may be determined on the basis of the header of IP layer of data (packet) for which determination about relay is to be made, on the basis of the inside of an IP packet such as the UDP (User Datagram Protocol) layer or TCP (Transmission Control Protocol) layer, or on the basis of the presence or absence of the RTP header, for example. In this embodiment, it is determined on the basis of the DSCP (Differentiated Services Code Point) field of IP layer.

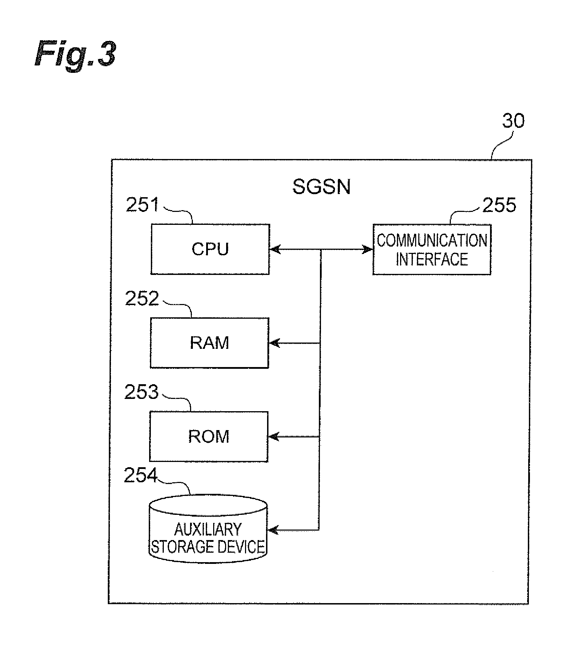

A hardware configuration of the SGSN 30 is described herinafter. Fig. 3 is a hardware configuration diagram of the SGSN 30. As shown in Fig. 3, the SGSN 30 is physically configured as a computer system that includes a CPU 251, a RAM 252 and ROM 253 serving as a main storage device, an auxiliary storage device 254 such as a hard disk, a communication interface 255 serving as a data transmitting and receiving device such as a network card and the like. The functions of the SGSN 30 described above are implemented by loading given computer software onto hardware such as the CPU 251 or the RAM 252 shown in Fig. 3 to make the communication interface 255 operate for communication under control of the CPU 251 and performing reading and writing of data in the RAM 252 or the auxiliary storage device 254.

### (Procedure of Relay/Non-relay Determination Process)

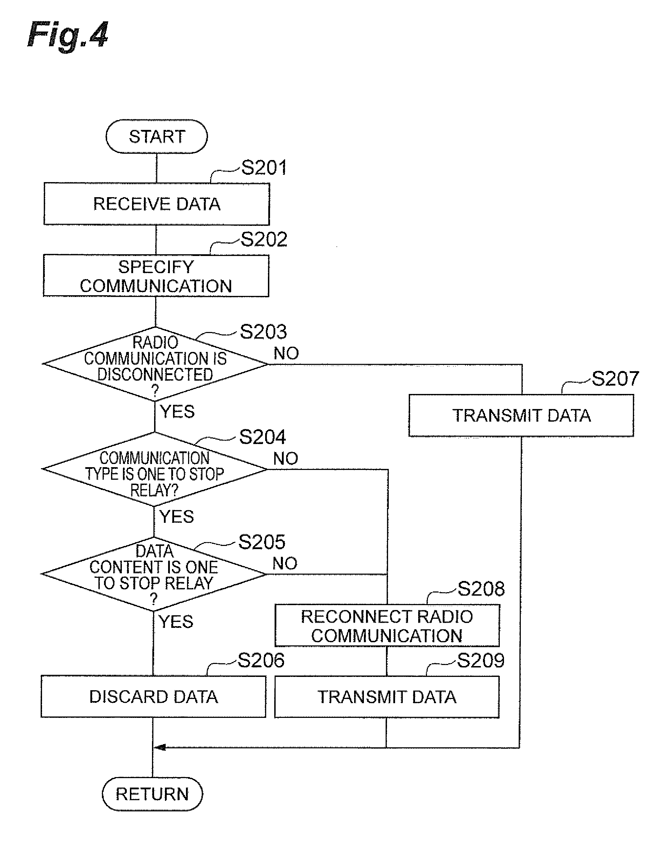

The flow of a process that the relay/non-relay determination unit 35 determines whether or not to relay data transmitted from the NW 40 to the mobile station 10 is described hereinafter. Fig. 4 is a flowchart showing the flow of a relay/non-relay determination process that is performed when data addressed to the mobile station 10 reaches the SGSN 30. Note that the relay/non-relay determination process shown in Fig. 4 is always executed during the period when the relay of data is performed by the SGSN 30. Further, the data reaches the SGSN 30 on a packet-by-packet basis.

In Step S201 (receiving step), the receiving unit 32 receives data transmitted from the NW 40. In Step S202, the communication control unit 31 specifies by which communication device and through which communication the data received by the receiving unit 32 is to be transmitted and received as described earlier. In this example, it is assumed that the data to be transmitted to the mobile station 10 is received by the receiving unit 32.

In Step S203, the disconnection detection unit 34 determines whether radio communication (in this example, radio communication between the mobile station 10 and the radio control apparatus 20) that is used to transmit the data received in Step S201 is disconnected or not. Specifically, the disconnection detection unit 34 determines whether a communication disconnection signal is received from the radio control apparatus 20 as described earlier. When the communication disconnection signal is not received, which means when radio communication is not disconnected (NO in Step S203), the process proceeds to Step S207. On the other hand, when the communication disconnection signal is received (YES in Step S203), the process proceeds to Step S204, determining that radio communication is disconnected.

In Step S204 (relay/non-relay determination step), the relay/non-relay determination unit 35 determines whether the type of communication for which radio communication is disconnected is the one to stop relay. Specifically, the relay/non-relay determination unit 35 determines the type of communication based on the information stored in the communication type determination unit 33 (information about the type of communication associated with each communication) and the communication of the mobile station 10 specified in Step S202. Then, the relay/non-relay determination unit 35 determines whether the relay should be stopped based on the type of communication and the prestored communication type association information that associates the type of communication with whether or not to perform relay. When the type of communication is not the one to stop relay (NO in Step S204), the process proceeds to Step S208. On the other hand, when the type of communication is the one to stop relay (YES in Step S204), the process proceeds to Step S205.

In Step S205 (relay/non-relay determination step), the relay/non-relay determination unit 35 determines whether the data received by the receiving unit 32 is the one to stop relay based on the content of the data. Specifically, the relay/non-relay determination unit 35 determines whether or not to transmit the data received by the receiving unit 32 to the mobile station 10 based on the data type association information that associates the content of data with whether or not to perform relay as described earlier. When the content of data is not the one to stop relay (NO in Step S205), the process proceeds to Step S208. On the other hand, when the content of communication is the one to stop relay (YES in Step S205), the process proceeds to Step S206.

In Step S206 (relay/non-relay determination step), the relay/non-relay determination unit 35 gives an instruction to stop the transmission of the data to the communication control unit 31 to discard the data. After the data is discarded, the process returns to Step S201 and repeats the above process.

When it is determined in Step S203 that radio communication is not disconnected, in Step S207, the communication control unit 31 transmits the data to the mobile station 10 through the communication specified in Step S201.

Further, when it is determined in Step S204 and Step S205 that the relay should not be stopped, the communication control unit 31 reconnects radio communication with the mobile station 10 in Step S208, and transmits the data to the mobile station 10 when the radio communication is established. Specifically, the reconnection is made by transmitting a paging signal to the mobile station 10, for example, as the way it used be.

By the above process, when the type of communication of data received by the receiving unit 32 when radio communication is disconnected is "Conversational" such as conversational communication and the content of the data is conversational data, the data is discarded and not transmitted to the mobile station 10. Further, when the type of communication is "Streaming" such as streaming, the data is transmitted after reconnection to the mobile station 10. Furthermore, even when the type of communication is the one to stop relay, if the content of the data is data related to a connection for communication or the like, for example, the data is transmitted by making a reconnection to the mobile station 10.

### (Flow of Data among Nodes When Relay of Data is Stopped)

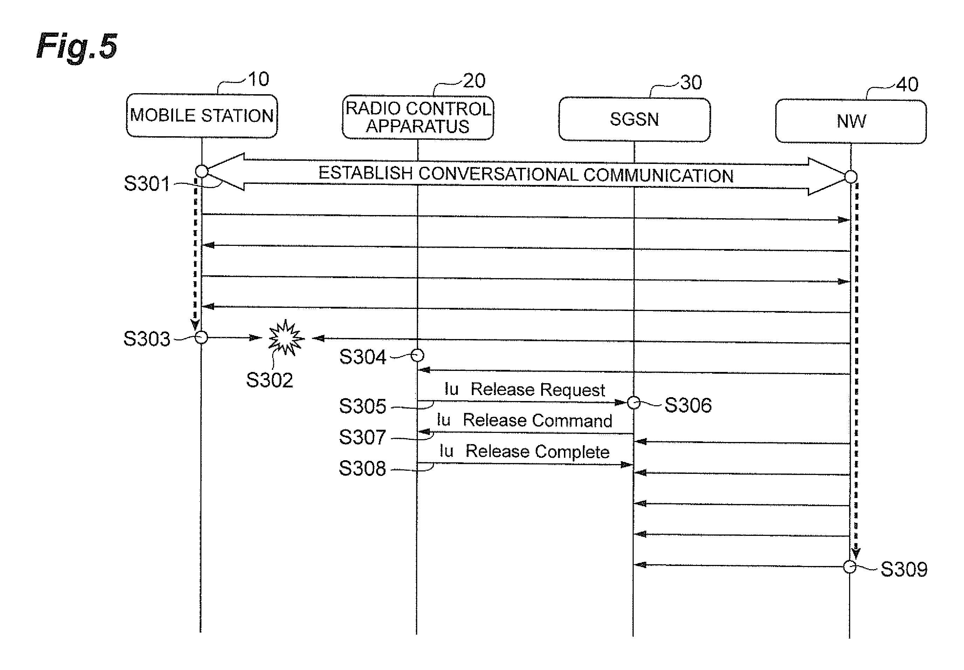

The flow of data among nodes in the case where the relay of data is stopped by the SGSN 30 after disconnection of radio communication, that is when a reconnection is not made after disconnection of radio communication, is described hereinbelow. Fig. 5 is a diagram showing the flow of data among nodes. It is assumed that, as the type of communication, conversational communication by SIP is established in this example.

When communication is started and a connection request signal or the like is transmitted and received between the mobile station 10 and the NW 40, conversational communication by SIP is established between the mobile station 10 and the NW 40 as shown in Step S301. Upon establishment of the conversational communication, the communication type determination unit 33 of the SGSN 30 determines the type of communication between the mobile station 10 and the NW 40 as described with reference to Fig. 2 (communication type determination step). Then, after Step S301, the SGSN 30 relays conversational data between the mobile station 10 and the NW 40 so that the mobile station 10 and the NW 40 can make conversation with each other.

When radio communication between the mobile station 10 and the radio control apparatus 20 is disconnected in Step S302, the radio control apparatus 20 detects the disconnection of radio communication by non-communication monitoring or the like in Step S304. Further, when radio communication is disconnected in Step S302, the mobile station 10 detects the disconnection of radio communication based on communication status or the like in Step S303. Upon detection of the disconnection of radio communication, the mobile station 10 stops transmission of data through radio communication, deletes call information or the like by SIP and thereby ends the conversational communication.

Upon detection of the disconnection of radio communication, the radio control apparatus 20 transmits "Iu Release Request" as a communication disconnection signal indicating the disconnection of radio communication to the SGSN 30 in Step S305. The disconnection detection unit 34 of the SGSN 30 receives "Iu Release Request" and thereby determines that radio communication between the mobile station 10 and the radio control apparatus 20 is disconnected in Step S306 (disconnection detection step). Adter determining that radio communication is disconnected, the SGSN 30 determines whether or not to transmit the data to the mobile station 10 based on the type of communication and the content of the data. It is assumed in this example that the transmission of data is stopped. The SGSN 30 therefore discards the data addressed to the mobile station 10 that is received when radio communication is disconnected. Note that the process to determine whether or not to relay data to the mobile station 10 which is described with reference to Fig. 4 is executed each time the SGSN 30 receives data addressed to the mobile station 10 from the NW 40 after conversational communication is established in Step S301 of Fig. 5.

Further, after determining that radio communication is disconnected, the SGSN 30 transmits "Iu Release Command" that is a control signal to stop radio communication to the radio control apparatus 20 in Step S307. The radio control apparatus 20 receives "Iu Release Command" and then transmits "Iu Release Complete" indicating that the stop of radio communication is completed to the SGSN 30 in Step S308.

Note that, after the relay of data addressed to the mobile station 10 is stopped by the radio control apparatus 20 (Step S306), a request for stopping communication is made to the NW 40 by RTCP non-communication monitoring by a SIP control device or the like, and the NW 40 thereby stops the transmission of data addressed to the mobile station 10 in Step S309.

This prevents that, in the case of performing conversational communication using SIP as the type of communication, after the mobile station 10 ends conversational communication due to disconnection of radio communication (Step S303), the SGSN 30 makes a reconnection to the mobile station 10 and transmits conversational data to the mobile station 10 as shown in Fig. 5. Note that, according to related art, because the mobile station 10 deletes call information or the like in SIP after the end of communication due to disconnection of radio communication (Step S303), even when the mobile station 10 receives data transmitted through the communication that has been performed before disconnection of radio communication, it cannot grasp the content of the data and thus discards the data. In this embodiment, because the SGSN 30 does not transmit the data which is to be discarded by the mobile station 10 after Step S306, wasteful consumption of a resource for radio communication can be reduced.

### (Advantageous Effects of Embodiment)

The advantageous effects of the communication system 1 according to this embodiment are described hereinbelow. In the communication system 1 according to this embodiment, in the case where the disconnection detection unit 34 in the SGSN 30 detects that radio communication with the mobile station 10 is disconnected, when the receiving unit 32 receives data addressed to the mobile station 10, the relay/non-relay determination unit 35 determines whether or not to relay the data based on the type of communication determined by the communication type determination unit 33 and performs the relay of the data according to the determination result. This allows the relay of data to be stopped for the type of communication such as conversational communication in SIP, and therefore unnecessary data is not transmitted to the mobile station 10, and the consumption of a resource for radio communication can be reduced. Particularly, application of this embodiment is particularly suitable in the case of performing communication via satellite between the mobile station 10 and the radio control apparatus 20, such as satellite telephone because a resource for the radio section is limited. Further, because unnecessary data is not transmitted to the mobile station 10, processing load on the mobile station 10 can be also reduced.

Further, the data relaying apparatus determines whether or not to perform relay of data in consideration of the data addressed to the mobile station 10 that is received by the receiving unit 32. Therefore, the relay can be done appropriately according to data, such as relaying SIP control data but not relaying voice data or the like, for example. Note that, however, the relay of data may be stopped by the determination only on the basis of the type of communication, without taking the data addressed to the mobile station 10 that is received by the receiving unit 32 into consideration.

It should be noted that the present invention is not limited to the above embodiment. For example, although the case of using SIP is shown in Fig. 5, the present invention is applicable when using another communication method.

Further, although the GPRS network 50 is used as an example of a communication network in the above embodiment, it is not limited thereto, and it is effective in a system in which line setting (disconnection of a line, connection of a line) is required in the radio section (for example, EPS in LTE).

Furthermore, the type of communication is not limited to the above-described four types, and for which type of communication the relay of data is to be performed is also not limited to the above-described example.

In addition, although determination as to whether or not to relay data is made in the relay/non-relay determination unit 35 of the SGSN 30 in the above-described embodiment, the determination may be made in another device. For example, determination as to whether or not to relay data may be made in a GGSN (Gateway GPRS Support Node) which is a gateway switch that connects different networks at the upper level of the SGSN 30. The determination result in the GGSN is notified to the SGSN 30, and control is made to stop communication or the like.

### Reference Signs List

10...mobile station, 30...SGSN, 32...receiving unit, 33... communication type determination unit, 34...disconnection detection unit, 35...relay/non-relay determination unit, 50...GPRS network

## Claims

1. A data relaying apparatus that is included in a mobile communication network and relays data transmitted to a mobile station, comprising:
a communication type determination means for determining a type of communication performed by the mobile station;
a disconnection detection means for detecting disconnection of a radio connection between the mobile station and the mobile communication network during communication of the mobile station;
a receiving means for receiving data addressed to the mobile station; and
a relay/non-relay determination means for, upon receipt of data addressed to the mobile station by the receiving means when disconnection of the radio connection is detected by the disconnection detection means, determining whether or not to relay the data based on the type of communication determined by the communication type determination means.

2. The data relaying apparatus according to Claim 1, wherein
the relay/non-relay determination means determines whether or not to relay the data based on data addressed to the mobile station that is received by the receiving means when disconnection of the radio connection is detected by the disconnection detection means and the type of communication determined by the communication type determination means.

3. A data relaying method in a data relaying apparatus that is included in a mobile communication network and relays data transmitted to a mobile station, comprising:
a communication type determination step of determining a type of communication performed by the mobile station;
a disconnection detection step of detecting disconnection of a radio connection between the mobile station and the mobile communication network during communication of the mobile station;
a receiving step of receiving data addressed to the mobile station; and
a relay/non-relay determination step of, upon receipt of data addressed to the mobile station in the receiving step when disconnection of the radio connection is detected in the disconnection detection step, determining whether or not to relay the data based on the type of communication determined in the communication type determination step.
